# EUROPÄISCHE PATENTSCHRIFT

(11) **EP 4 035 788 B1**
(45) Veröffentlichungstag und Bekanntmachung des Hinweises auf die Patenterteilung: **17.01.2024**
(21) Anmeldenummer: 22152198.2
(22) Anmeldetag: 19.01.2022
(51) Int. Cl.: B21B 27/00, B23K 26/352, B21B 1/22

(54) **VERFAHREN ZUM TEXTURIEREN EINER DRESSIERWALZE**
METHOD FOR TEXTURING A SKIN-PASS ROLL
PROCÉDÉ DE TEXTURATION D'UN CYLINDRE DE DRESSAGE

(30) Priorität: 28.01.2021 DE 102021200744
(43) Veröffentlichungstag der Anmeldung: 03.08.2022
(73) Patentinhaber: ThyssenKrupp Steel Europe AG, 47166 Duisburg (DE)
(72) Erfinder: Cetinkaya, Burak-William, 44139 Dortmund (DE); Junge, Fabian, 40239 Düsseldorf (DE); Vogt, Oliver, 44319 Dortmund (DE)
(74) Vertreter: ThyssenKrupp Steel Europe AG

(56) Entgegenhaltungen:
- EP-A1- 0 892 288
- EP-B1- 2 892 663
- JP-A- H06 114 405
- JP-A- 2001 279 493
- KEIJI NISHIMURA ET AL: "DEVELOPMENT OF HIGH IMAGE CLARITY STEEL SHEET BY LASER TEXTURING", AISE STEEL TECHNOLOGY, AISE, PITTSBURG, PA, US, Bd. 68, Nr. 8, 1. August 1991 (1991-08-01) , Seiten 46-51, XP000228092, ISSN: 0021-1559

## Beschreibung

Die Erfindung betrifft ein Verfahren zum Texturieren einer Dressierwalze.

Im Automobil- sowie im Coil-Coating-Bereich sind nach der Lackierung möglichst glatte, fehlerfreie Stahlblechoberflächen gewünscht. Die Rauheit in Form der Welligkeit der Lackoberfläche korreliert hierbei mit der Welligkeit der lackfreien, unbeschichteten Stahlblechoberfläche. Ein Indikator, der mit der Lackanmutung im direkten Zusammenhang steht, ist der sogenannte Wsa-Wert (arithmetische Mittenwelligkeit). Um den Wsa-Wert der Stahlblechoberfläche zu ermitteln, wird aus dem im Schnitt betrachteten und erfassten Höhenprofil (das tatsächlich gemessene Primärprofil, auch P-Profil genannt) durch Filterung des P-Profils nach DIN EN ISO 11562 / 16610-21 das sogenannte Welligkeitsprofil (W-Profil) und das sogenannte Rauheitsprofil (R-Profil) erstellt. Die Grenze zwischen Welligkeit und Rauheit ist die Grenzwellenlänge λc (Cut-off), welche in der DIN EN ISO 4288 festgelegt ist. Aus dem Welligkeitsprofil (W) lässt sich somit die arithmetische Mittenwelligkeit Wsa-Wert ermitteln. Nach DIN EN ISO 4287 gelten alle Kenngrößendefinitionen sowohl für das Rauheits- (R) als auch das Primär- (P) und Welligkeitsprofil (W). In der SEP 1941 ist die Messung des Welligkeitskennwerts Wsa(1-5) genau definiert. Bei der Filterung der Funktion des Primärprofils (P) eines beschichteten Stahlblechs sind dessen periodischen Anteile in einem Wellenlängenbereich zwischen der unteren Grenzwellenlänge 1 mm und der oberen Grenzwellenlänge 5 mm von besonderem Interesse, da dieser entscheidend für die Lackanmutung ist. Bei zu großen Wsa(1-5)-Werten > 0,3 µm der Stahlblechoberfläche steigt das Risiko, dass der Lack nach Aushärtung Oberflächendefekte wie zum Beispiel Orangenhaut aufweist. Daher werden seitens der Automobilhersteller Blechoberflächen mit Wsa(1-5)-Werten < 0,3 µm gefordert.

Im Zuge der Produktionsprozesse wird durch unterschiedliche Maßnahmen versucht, Einfluss auf den Wsa(1-5)-Wert und damit auf die letztliche Lackierbarkeit der Stahlblechoberfläche zu nehmen. Sowohl bei schmelztauch- als auch bei elektrolytisch beschichteten Stahlblechen trägt im Wesentlichen die Welligkeit der Stahlblechoberfläche vor Beschichtung zum eigentlichen Wsa(1-5)-Wert bei. Durch das Dressieren der Stahlbleche respektive Stahlblechoberfläche vor dem Beschichten, wie es konventionell beim elektrolytischen Beschichten durchgeführt wird, werden die Auslenkungen im Primärprofil als auch Welligkeitsprofil und somit der Wsa(1-5)-Wert reduziert. Hierbei wäre eine isotrope Kornorientierung im Stahlblech wünschenswert, damit die Walzkräfte homogen auf das Stahlblech übertragen werden, so dass die periodischen Anteile der Oberflächenstruktur am Stahlblech mit einem Wellenlängenbereich zwischen 1 und 5 mm eine möglichst geringe Amplitude besitzen. Nach Schmelztauchbeschichtung der Stahlblechoberfläche ist es aktuell nur geringfügig möglich, den Wsa(1-5)-Wert durch den nachträglichen Dressierprozess gezielt zu beeinflussen. Die Oberflächentopografie einer Dressierwalze kann auf unterschiedliche Art und Weise erzeugt werden, entweder mit einer stochastischen oder einer deterministischen Textur.

Stochastisch, insbesondere mittels EDT (electro discharge texturing), texturierte Dressierwalzen, vgl. beispielsweise EP 2 006 037 B1, besitzen eine Welligkeit, deren periodische Anteile Wellenlängen aufweisen, die unterhalb der Cut-Off Wellenlänge λc des Welligkeitsprofilfilters gemäß ISO 16610-21 (z. B. mit einer Wellenlänge = 2,5 mm) beziehungsweise SEP1941 (Wellenlänge = 1 mm) liegen sodass die Topografie der texturierten Dressierwalze keinen direkten Effekt auf den entsprechenden Wsa-Wert und damit auch nicht auf die Lackanmutung hat. Lediglich durch ein homogenes Abschleifen der Dressierwalze nach Texturierung kann in manchen Bereichen des dressierten Stahlblechs eine Reduktion des Wsa-Wertes erzielt werden, ohne jedoch einen flächendeckenden Wert < 0.3 µm sicher gewährleisten zu können. Die derzeitig applizierten Techniken zur Minimierung des Wsa-Wertes gehen entweder mit einem zusätzlichen nicht immer gleichen und daher instabilen Schleifschritt der Dressierwalze nach Beschichtung (Hartverchromung) einher oder sind stark abhängig von der Verteilung der Kornorientierung im Stahlblech. Auch deterministisch, insbesondere mittels Laser (LT= laser texturing), texturierte Dressierwalzen, vgl. beispielsweise Patentschrift EP 2 892 663 B1, liegen derzeit ebenfalls in dem gleichen Bereich.

Die Aufgabe der Erfindung ist daher ein Verfahren zur Texturierung einer Dressierwalze anzugeben, mit welchen die Nachteile aus dem Stand der Technik behoben werden können.

Die Aufgabe in Bezug auf das Verfahren wird mit den Merkmalen des Anspruchs 1 gelöst.

Mithilfe von stochastisch texturierten Dressierwalzen ist eine Einflussnahme auf den Wsa-Wert des Stahlblechs nicht möglich. Mithilfe von deterministisch texturierten Dressierwalzen kann die Langwelligkeit der Oberfläche der Dressierwalze, also die periodischen Anteile des Primärprofils (P) mit Wellenlängen größer als 1 mm, unter Verwendung eines Lasers, insbesondere eines Kurzpulslasers, vorzugsweise eines Ultrakurzpulslasers, mit welchem filigranere Texturen auf der Oberfläche der Dressierwalze erzeugt und somit zu signifikanten Teilen auf das Stahlblech im Zuge des Dressierens übertragen werden können, gezielt beeinflusst werden.

Gemäß einer ersten Lehre haben die Erfinder festgestellt, dass beim Verfahren zum Lasertexturieren einer Dressierwalze, wobei die Oberfläche der Dressierwalze mit einem Laser bearbeitet wird, eine deterministische Oberflächentopografie mittels Ablation auf der Oberfläche der Dressierwalze erzeugt werden kann, wobei die Bearbeitung mit dem Laser derart durchgeführt wird, dass die Oberflächentopografie zumindest entlang mehrerer parallel zueinander und in Achsrichtung und/oder in Umfangsrichtung der Dressierwalze verlaufende Linien jeweils einem wellenförmigen Oberflächenprofil folgt, wobei das aus dem Oberflächenprofil gefilterte Rauheitsprofil im Schnitt entlang der Linie in Axialrichtung und/oder in Umfangsrichtung der Dressierwalze mindestens eine Wellenfunktion umfasst, welche eine Wellenlänge λ_{WiD} <= 1 mm und eine Amplitude a_{WiD} > 0,3 µm aufweist.

Zur Filterung des Rauheitsprofils aus dem (tatsächlichen) Oberflächenprofil der Oberflächentopografie wird beispielsweise ein Gaußfilter gemäß ISO 16610-21 (z. B. Ausgabe Juni 2013) mit einer Grenzwellenlänge λ_{GC} = 2,5 mm verwendet. Die Grenzwellenlänge λ_{GC} wird aus der DIN EN ISO 4288 (z. B. Ausgabe April 1998), Punkt 7 Tabelle 1 festgelegt, da von einem aperiodischen Profil mit einer Rauheit der Textur zwischen 2 und 10 µm ausgegangen und dadurch eine Einzelmesstrecke von 2,5 mm, welche somit λ_{GG} entspricht, gefordert wird. Auch wenn bei einer deterministischen Textur im engeren Sinne von periodischen Profilen ausgegangen werden könnte, dadurch eventuell eine Rillenform wie in der DIN EN ISO 4288, Punkt 7 Tabelle 3 "RSm", hätte in Betracht gezogen werden können, wird hier jedoch im Vorliegenden nicht berücksichtigt, da im dritten Abschnitt der Einleitung in der DIN EN ISO 4288 beschrieben ist, dass die Unterscheidung zwischen aperiodischen und periodischen Profilen einer subjektiven Beurteilung unterliegt und dem Anwender entsprechend überlassen wird, so dass im Folgenden die Beurteilung anhand aperiodischen Profilen erfolgt und dies im Sinne der DIN EN ISO 4288 zulässig ist.

Das gefilterte Rauheitsprofil kann eine sinusförmige Wellenfunktion oder eine Überlagerung aus mehreren sinus- und cosinusförmigen Wellenfunktionen umfassen, wobei jede Wellenfunktion durch eine Wellenlänge und eine Amplitude definiert ist und somit jede Wellenfunktion jeweils einen periodischen Anteil widerspiegelt (Fourier-Transformation bzw. Fourier-Analyse). Im Idealfall würde das gefilterte Rauheitsprofil einer Wellenfunktion mit einer Wellenlänge und einer Amplitude entsprechen. Es können aber auch zwei oder mehrere überlagerte Wellenfunktionen mit jeweiligen periodischen Anteilen in dem gefilterten Rauheitsprofil vorhanden sein. Erfindungsgemäß weist die Wellenfunktion oder mindestens eine der Wellenfunktionen eine Wellenlänge λ_{WiD}, im Schnitt in Axialrichtung (Längsschnitt) und/oder im Schnitt in Umfangsrichtung (Querschnitt) betrachtet, mindestens 0,04 mm, insbesondere mindestens 0,1 mm, vorzugsweise mindestens 0,3 mm betragen. λ_{WiD} ist maximal 1 mm, und kann insbesondere maximal 0,9 mm, vorzugsweise maximal 0,8 mm auf. Die Amplitude a_{WiD} der mindestens einen Wellenfunktion ist größer 0,3 µm, insbesondere mindestens 0,4 µm, vorzugsweise mindestens 0,7 µm, bevorzugt mindestens 1 µm. a_{WiD} kann maximal 12 µm, insbesondere maximal 8 µm, vorzugsweise maximal 8 µm, bevorzugt maximal 4 µm betragen. Besonders bevorzugt ist die Wellenfunktion der in Rede stehenden Art, welche, wie beschrieben, im Idealfall die eine Wellenfunktion mit einer Wellenlänge und einer Amplitude entsprechen kann, oder die aus mehreren überlagerten Wellenfunktionen herausstechende Wellenfunktion, als dominierende Wellenfunktion (Masterwellenfunktion) mit dominierender Wellenlänge (Masterwellenlänge) und dominierender Amplitude (Masteramplitude) zu sehen. Die Amplitude der Wellenfunktion (Masterwellenfunktion) mit der größten Amplitude (Masteramplitude) beträgt mindestens 50 % der Summe der Amplituden aller Wellenfunktionen, insbesondere mindestens 75 %, vorzugsweise mindestens 90 %, bevorzugt mindestens 95 %.

Insbesondere können alle Wellenfunktionen und somit alle periodischen Anteile jeweils eine Wellenlänge λ_{WiD} =< 1 mm und die Wellenfunktion mit der größten Amplitude eine Amplitude a_{WiD} > 0,3 µm aufweisen. Das aus dem Primärprofil gefilterte Welligkeitsprofil wiederum setzt sich ebenfalls aus Wellenfunktionen zusammen, deren Wellenfunktionen mit Wellenlängen größer 1 mm und Amplituden kleiner 0,1 µm aufweisen.

Verfahren und Vorrichtungen zum Lasertexturieren von Dressierwalzen sind u. a. beispielhaft in der EP 2 892 663 B1 beschrieben und daher in Fachkreisen geläufig.

Unter deterministischer Oberflächentopografie/Oberflächenstruktur sind wiederkehrende Oberflächenstrukturen zu verstehen, welche eine definierte Form und/oder Ausgestaltung aufweisen, vgl. auch EP 2 892 663 B1. Insbesondere gehören hierzu zudem Oberflächen mit einer (quasi-)stochastischen Anmutung, die jedoch mittels eines deterministischen Texturierungsverfahrens aufgebracht werden und sich somit aus deterministischen Formelementen zusammensetzen.

Unter Oberflächenprofil, ist ein Verlauf respektive ein Profil der Oberflächenstruktur im Schnitt entlang einer definierten Messstrecke zu verstehen. Aus dem Oberflächenprofil wird das Rauheitsprofil gefiltert, wobei langwellige Anteile mit einer Wellenlänge größer als 2,5 mm abgeschnitten werden.

Zum Lasertexturieren wird in der Regel rechnergestützt eine zu erzeugende Oberflächentopografie erstellt. Dabei wird zunächst die Umfangsfläche/Oberfläche der zu texturierenden Dressierwalze in eine abgewickelte Fläche abgebildet. Es wird ein Laserbeschussraster festgelegt, wobei das Laserbeschussraster eine n x m-Matrix aufspannt, wobei n die Anzahl nebeneinanderliegender Punkte in Axialrichtung und m die Anzahl nebeneinanderliegender Punkte in Umfangsrichtung der Dressierwalze wiederspiegelt. Da die Oberflächentopografie eine deterministische Struktur aufweisen soll, wird ein wiederkehrendes Muster sowohl in Axialwie auch in Umfangsrichtung der Dressierwalze bestimmt. Dadurch kann eine Oberflächentopografie mit einem zumindest entlang mehrerer parallel zueinander und in Achsrichtung und/oder in Umfangsrichtung der Dressierwalze verlaufende Linien jeweils einem wellenförmigen Oberflächenprofil erzeugt werden. Das wiederkehrende Muster wird beispielsweise als sogenannte Elementarzelle definiert, welche eine a x b-Matrix aufspannt und innerhalb der m x n-Matrix sowohl in Axial- wie auch in Umfangsrichtung sich wiederholend nebeneinander angeordnet wird. Der Laser bearbeitet die Oberfläche der Dressierwalze somit in Axialrichtung und/oder in Umfangsrichtung, wobei das Laserbeschussraster, sprich die a x b-Matrix respektive m x n-Matrix, in einzelne Punkte (Laserbeschusspunkte) unterteilt wird, welche vom Laser angesteuert werden können oder nicht. Aufgrund der zu erzeugenden Oberflächentopografie mit einem wellenförmigen Oberflächenprofil werden die Punkte mit unterschiedlichen Intensitäten angesteuert, d.h. dass in Axial- wie auch in Umfangsrichtung nebeneinanderliegende Punkte mit einer Intensität zwischen 0 % und 100 % bearbeitet werden, wobei eine Intensität von 0 % kein Einwirken auf die Oberfläche erfolgt und somit in diesem Punkt oder in diesen Punkten auch keine Ablation stattfindet. Gemäß einer bevorzugten Ausgestaltung des erfindungsgemäßen Verfahrens wird der Laser zur Erzeugung der Oberflächentopografie in Axialrichtung und/oder in Umfangsrichtung der Dressierwalze mit unterschiedlichen Intensitäten angesteuert. Abhängig von dem Fokus-Durchmesser des Lasers, insbesondere bei der Verwendung eines Ultrakurzpuls-Lasers (Pikosekunden-Laser) kann positiv Einfluss auf die Steigung und somit auch auf das zu erzeugende wellenförmige Oberflächenprofil auf der Dressierwalze respektive gezielt dem aus dem Oberflächenprofil gefilterte Rauheitsprofil mindestens eine Wellenfunktion mit einer Wellenlänge λ_{WiD} <= 1 mm und einer Amplitude a_{WiD} > 0,3 µm aufzuprägen.

Es ist in den Fachkreisen bekannt, dass kein vollständiger Übertrag der Oberflächentopografie der Dressierwalze auf die Oberfläche des Stahlblechs erfolgen kann, sondern im Wesentlichen nur die signifikanten Teile, wie zum Beispiel die Spitzen des Oberflächenprofils der Dressierwalze, in die Oberfläche des Stahlblechs eindringen und damit der Oberfläche des Stahlblechs nach dem Dressieren ein neues Erscheinungsbild respektive Charakteristikum verleihen, welche sich vom Zustand vor dem Dressieren unterscheidet. Die Oberfläche (positive Form) der Dressierwalze bildet durch Krafteinwirkung auf die Oberfläche des insbesondere beschichteten Stahlblechs eine Oberflächenstruktur aus, welche sich somit nur zum Teil in der Oberfläche (negative Form) des Stahlblechs abprägt.

Der Abstand, welcher konstant und regelmäßig (periodisch) vorliegen soll, kann sich je nach Ausgestaltung der Vertiefung entweder auf den tiefsten Punkt, falls dieser eindeutig ermittelbar ist, oder bei einer flächigen Vertiefung (gestreckte, linienförmige Strukturen) quasi der Schwerpunkt als Referenzpunkt(e) entlang einer Linie beziehen.

Unter Stahlblech ist allgemein ein Stahlflachprodukt zu verstehen, welches in Blechform bzw. in Platinenform oder in Bandform bereitgestellt werden kann.

Das Stahlblech kann unbeschichtet oder vorzugsweise beschichtet sein. Ist das Stahlblech beschichtet, so umfasst die Beschichtung des beschichteten Stahlblechs einen metallischen Überzug.

Gemäß einer Ausgestaltung eines nicht erfindungsgemäßen Stahlblechs ist das Stahlblech mit einem zinkbasierten Überzug beschichtet, welcher durch Schmelztauchbeschichten aufgebracht ist, wobei im Überzug neben Zink und unvermeidbaren Verunreinigungen zusätrliche Elemente wie Aluminium mit einem Gehalt von bis zu 5 Gew.-% und/oder Magnesium mit einem Gehalt von bis zu 5 Gew.-% in dem Überzug enthalten sein können. Stahlbleche mit zinkbasiertem Überzug weisen einen sehr guten kathodischen Korrosionsschutz auf, welche seit Jahren im Automobilbau eingesetzt werden. Ist ein verbesserter Korrosionsschutz vorgesehen, weist der Überzug zusätzlich Magnesium mit einem Gehalt von mindestens 0,3 Gew.-%, insbesondere von mindestens 0,6 Gew.-%, vorzugsweise von mindestens 0,9 Gew.-% auf. Aluminium kann alternativ oder zusätzlich zu Magnesium mit einem Gehalt von mindestens 0,1 Gew.-%, insbesondere von mindestens 0,3 Gew.-% vorhanden sein, um beispielsweise eine Anbindung des Überzugs an das Stahlblech zu verbessern und insbesondere eine Diffusion von Eisen aus dem Stahlblech in den Überzug bei einer Wärmebehandlung des beschichteten Stahlblechs im Wesentlichen zu vermeiden, damit beispielsweise eine gute Klebeignung gewährleistet werden kann. Dabei kann eine Dicke des Überzugs zwischen 1,5 und 15 µm, insbesondere zwischen 2 und 12 µm, vorzugsweise zwischen 3 und 10 µm betragen. Unterhalb der Mindestgrenze kann kein ausreichender kathodischer Korrosionsschutz gewährleistet werden und oberhalb der Höchstgrenze können Fügeprobleme beim Verbinden des Stahlblechs respektive eines daraus gefertigten Bauteils mit einem anderen Bauteil auftreten, insbesondere kann bei Überschreiten der Dicke des Überzugs angegebene Höchstgrenze kein stabiler Prozess beim thermischen Fügen bzw. Schweißen sichergestellt werden.

Das Dressieren beim Vorsehen eines Stahlblechs mit einem mittels Schmelztauchen beschichteten Überzugs erfolgt in der Regel nach dem Beschichten, so dass durch das Aufprägen der definierten Periodizität der Vertiefungen in die Oberfläche des beschichteten Stahlblechs die Oberfläche der Beschichtung modifiziert wird.

Gemäß einer alternativen Ausgestaltung eines nicht erfindungsgemäßen Stahlblechs ist das Stahlblech mit einem zinkbasierten Überzug beschichtet, welcher durch elektrolytisches Beschichten aufgebracht ist. Dabei kann eine Dicke des Überzugs zwischen 1,5 und 15 µm, insbesondere zwischen 2 und 12 µm, vorzugsweise zwischen 3 und 10 µm betragen.

Das Dressieren beim Vorsehen eines Stahlblechs mit einer mittels elektrolytischer Beschichtung beschichteten Überzugs erfolgt in der Regel vor dem Beschichten, so dass durch das Aufprägen der definierten Periodizität der Vertiefungen in die Oberfläche des unbeschichteten Stahlblechs die Oberfläche des Stahlblechs modifiziert werden kann.

Gemäß einer Ausgestaltung eines nicht erfindungsgemäßen Stahlblechs hat das Stahlblech einen Welligkeitskennwert Wsa(1-5) kleiner 0,30 µm, ermittelt nach SEP 1941. Insbesondere ist der WelligkeitskennwertWsa(1-5) kleiner 0,27 µm, vorzugsweise kleiner 0,24 µm, bevorzugt kleiner 0,21 µm, besonders bevorzugt kleiner 0,18 µm, weiter bevorzugt kleiner 0,15 µm.

Durch das Aufprägen einer definierten Periodizität der Vertiefungen in die Oberfläche des Stahlblechs wird die Oberfläche dahingehend modifiziert, dass der nach SEP 1941 zu ermittelnde Wsa(1-5)-Wert durch die Welligkeitsfilterung im Bereich zwischen λ_{c} von 1 mm und λ_{F} von 5 mm positiv beeinflusst werden kann, indem er kleiner ausfällt als bisher im Stand der Technik. Durch die quasi Manipulation der Oberfläche hinsichtlich ihrer periodischen Anteile, kann der Wsa(1-5)-Wert gemäß SEP1941 reduziert werden, was sich vorteilhaft auf die Lackierbarkeit und optische Anmutung auswirken kann.

Im Folgenden werden konkrete Ausgestaltungen der Erfindung mit Bezugnahme auf die Zeichnung im Detail näher erläutert. Die Zeichnung und begleitende Beschreibung der resultierenden Merkmale sind nicht beschränkend auf die jeweiligen Ausgestaltungen zu lesen, dienen jedoch der Illustration beispielhafter Ausgestaltung. Weiterhin können die jeweiligen Merkmale untereinander wie auch mit Merkmalen der obigen Beschreibung genutzt werden für mögliche weitere Entwicklungen und Verbesserungen der Erfindung, im Rahmen des durch die Ansprüche definierten Schutzumfanges, speziell bei zusätzlichen Ausgestaltungen, welche nicht dargestellt sind. Gleiche Teile sind stets mit den gleichen Bezugszeichen versehen.

Die Zeichnung zeigt in
- **Figur 1)**: ein Verfahren zur Erzeugung einer deterministischen Oberflächentopografie auf der Oberfläche einer Dressierwalze gemäß einer erfindungsgemäßen Ausführung als schematische Teilschnittansicht der Dressierwalze,
- **Figur 2)**: eine 3D-Oberfläche einer deterministisch texturierten Dressierwalze in Teilansicht gemäß einer nicht erfindungsgemäßen Ausführung und
- **Figur 3)**: ein mit einer deterministischen Oberflächenstruktur dressiertes Stahlblech in Teilansicht, dressiert mittels Dressierwalze gemäß Figur 2.

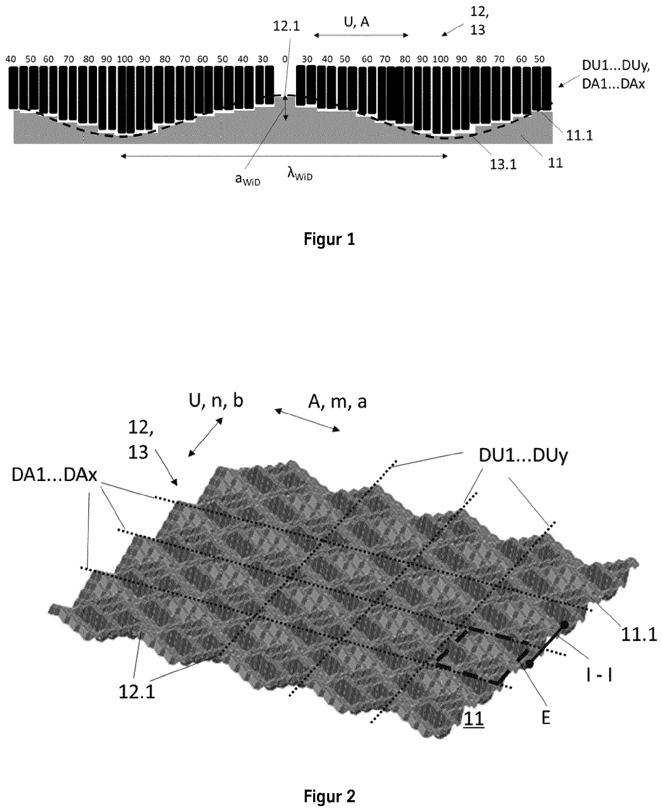

In **Figur 1** ist eine schematische Teilschnittansicht, welche in Umfangsrichtung (U) der Dressierwalze (11) (Querschnittansicht) oder in Axialrichtung (A) der Dressierwalze (11) (Längsschnittansicht) einer Oberfläche (11.1) einer Dressierwalze (11) dargestellt. Die Dressierwalze (11) weist eine Oberfläche (11.1) mit einer deterministischen Oberflächentopografie (12) auf. Schematisch ist gezeigt, wie ein Verfahren zum Lasertexturieren der Dressierwalze (11) erfindungsgemäß umgesetzt werden kann, wobei die Oberfläche (11.1) der Dressierwalze (11) mit einem Laser (nicht dargestellt, dargestellt sind nur die einzelnen Laserschüsse in Form von schwarzen Balken) bearbeitet wird, so dass eine deterministische Oberflächentopografie (12) mittels Ablation auf der Oberfläche (11.1) der Dressierwalze (11) erzeugt wird. Die Oberflächentopografie (12) folgt zumindest entlang mehrerer parallel zueinander und in Achsrichtung (A) und/oder in Umfangsrichtung (U) der Dressierwalze (11) verlaufende Linien (DA1...DAx, DU1...DUy) jeweils einem wellenförmigen Oberflächenprofil (13), wobei das aus dem Oberflächenprofil (13) gefilterte Rauheitsprofil (13.1) im Schnitt entlang der Linie (DA1...DAx, DU1...DUy) in Axialrichtung (A) und/oder in Umfangsrichtung (U) der Dressierwalze (11) mindestens eine Wellenfunktion umfasst, wobei die mindestens eine Wellenfunktion eine Wellenlänge λ_{WiD} =< 1 mm und einer Amplitude a_{WiD} > 0,3 µm aufweist, wobei die Amplitude der Wellenfunktion mit der größten Amplitude beträgt mindestens 50 % der Summe der Amplituden aller Wellenfunktionen, insbesondere mindestens 75 %, vorzugsweise mindestens 90 %, bevorzugt mindestens 95 %. Das zugehörige Rauheitsprofil (13.1) weist einen periodischen Anteil mit einer Wellenlänge λ_{WiD} =< 1 mm und einer Amplitude a_{WiD} > 0,3 µm auf. Der Laser zur Erzeugung und das im Schnitt, entlang einer Linie (DA1...DAx, DU1...DUy), entstandene tatsächliche Oberflächenprofil (13) wird in Axialrichtung (A) und/oder in Umfangsrichtung (U) der Dressierwalze (11) mit unterschiedlichen Intensitäten angesteuert. Die Intensitäten sind in Figur 1 jeweils oberhalb der einzelnen schwarzen Balken aufgeführt. Dadurch werden in Axial- wie auch in Umfangsrichtung nebeneinanderliegende Punkte (Laserschüsse) mit einer Intensität zwischen 0 % und 100 % bearbeitet werden, wobei eine Intensität von 0 % kein Einwirken auf die Oberfläche erfolgt und somit in diesem Punkt oder diesen Punkten auch keine Ablation stattfindet. Aufgrund des Durchmessers des verwendeten Lasers, beispielsweise ein Kurzpuls- oder Ultrakurzpulslaser, im Brennpunkt kann infolge der unterschiedlichen Intensitäten zwar ein stufenweises, abhängig vom Durchmesser und somit von einer endlichen Breite im Schnitt gesehen, Auf- und Absteigen zwischen Spitzen und Täler des tatsächlichen/realen Oberflächenprofils (13) erzeugt werden, letztendlich führt nur eine Filterung zum geschmeidigen wellenförmigen Verlauf des Rauheitsprofils (13.1), so dass in diesem Zuge die Wellenlänge λ_{WiD} und Amplitude a_{WiD} der mindestens einen Wellenfunktion aus dem gefilterten Rauheitsprofil (13.1) im Schnitt entlang der Linie (DA1...DAx, DU1...DUy) in Axialrichtung (A) und/oder in Umfangsrichtung (U) bestimmbar ist, wobei erfindungsgemäß die Wellenlänge λ_{WiD} =< 1 mm und die Amplitude a_{WiD} > 0,3 µm sind. Die Art der Intensität und der gewählte Fokus-Durchmesser kann somit Einfluss auf die Höhe der Wellenlänge und Höhe der Amplitude des Rauheitsprofils nehmen.

Zum Lasertexturieren wird in der Regel rechnergestützt eine zu erzeugende Oberflächentopografie (12) erstellt. Dabei wird zunächst die Umfangsfläche/Oberfläche (11.1) der zu texturierenden Dressierwalze (11) in eine abgewickelte Fläche abgebildet. Es wird ein Laserbeschussraster festgelegt, wobei das Laserbeschussraster eine n x m-Matrix aufspannt, wobei n die Anzahl nebeneinanderliegender Punkte in Axialrichtung (A) und m die Anzahl nebeneinanderliegender Punkte in Umfangsrichtung (U) der Dressierwalze (11) widerspiegelt. Da die Oberflächentopografie (12) eine deterministische Struktur aufweisen soll, wird ein wiederkehrendes Muster sowohl in Axialrichtung (A) wie auch in Umfangsrichtung (U) der Dressierwalze (11) bestimmt. Dadurch kann eine Oberflächentopografie (12) mit einem zumindest entlang mehrerer parallel zueinander und in Axialrichtung (A) und/oder in Umfangsrichtung (U) der Dressierwalze (11) verlaufende Linien (DA1... DAx, DU1...DUy) jeweils einem wellenförmigen Oberflächenprofil (13) erzeugt werden. Das wiederkehrende Muster wird beispielsweise als sogenannte Elementarzelle (E) definiert, siehe **Figur 2****,** welche eine a x b-Matrix aufspannt und innerhalb der m x n-Matrix sowohl in Axialrichtung (A) wie auch in Umfangsrichtung (U) sich wiederholend nebeneinander angeordnet werden. Der Laser bearbeitet die Oberfläche (11.1) der Dressierwalze (11) somit in Axialrichtung (A) und/oder in Umfangsrichtung (U), wobei das Laserbeschussraster, sprich die a x b-Matrix respektive m x n-Matrix, in einzelne Punkte (Laserbeschusspunkte) unterteilt wird, welche vom Laser angesteuert werden können oder nicht. Der in Figur 1 dargestellte Teilschnitt ist beispielsweise in der in Figur 2 mit dem Bezugszeichen (I-I) eingezeichnete Strecke wiedergegeben. Aus dem erzeugten Oberflächenprofil (13) wird das Rauheitsprofil (13.1) durch den Gaußfilter gemäß DIN EN ISO 16610-21 mit Grenzwellenlänge λ_{GC} von 2,5 mm gemäß DIN EN ISO 4288 gefiltert, und es konnte in diesem Beispiel eine Wellenfunktion, die dem Rauheitsprofil (13.1) entspricht, mit einer Wellenlänge λ_{WiD} von 0,3 mm bzw. 300 µm und einer Amplitude a_{WiD} von 4 µm bestimmt werden.

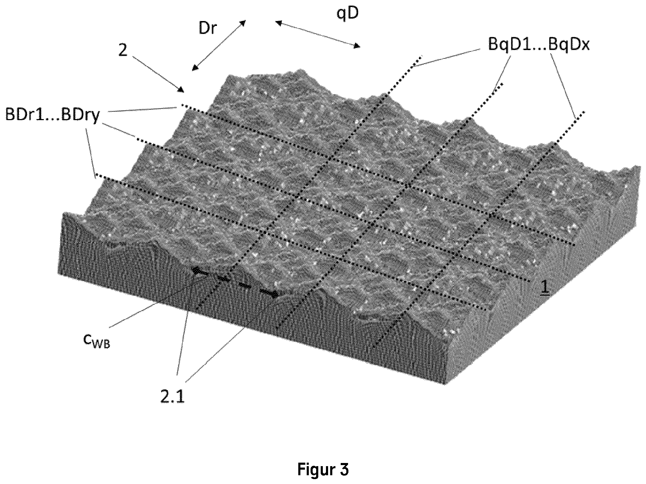

Die Oberflächentopografie (12) der Dressierwalze (11) weist entlang der parallel zueinander verlaufende Linien (DA1...Dax) in Axialrichtung (A) und/oder entlang der parallel zueinander verlaufende Linien (DU1...DUy) in Umfangsrichtung (U) Spitzen (12.1) auf, welche in einer Periodizität respektive Wellenlänge λ_{WiD} der Wellenfunktion respektive des Rauheitsprofils (13.1) erzeugt werden, welche sich wiederum beim Dressieren eines Stahlblechs, insbesondere eines mit einem metallischen Überzug beschichteten Stahlblechs, in Form von Vertiefungen (2.1) in der Oberfläche des dressierten Stahlblechs (1) einprägen, wobei die Vertiefungen (2.1) zumindest entlang mehrerer parallel zueinander und quer zur Dressierrichtung (qD) und/oder in Dressierrichtung (Dr) verlaufenden Linien (BqD1...BqDx, BDr1...BDry) in einem konstanten und regelmäßigen Abstand zueinander angeordnet sind, wobei der Abstand c_{WB} =< 0,3 mm bzw. 300 µm entspricht, vgl. **Figur 3****.** Die dressierte Tiefe der Vertiefungen (2.1) betragen ca. 4,5 µm.

Mittels Dressierwalzen (11) gemäß der Ausführung in Figur 2 wurde ein unbeschichtetes Stahlblech (1) mit einer Dicke von 0,8 mm beidseitig mit einem Dressiergrad von 1 % dressiert. Anschließend ist ein zinkbasierter Überzug elektrolytisch mit einer Dicke von 10 µm aufgebracht worden. Unter Anwendung der Vorschriften in SEP1941 wurde ein Wsa(1-5) in Dressierrichtung (Dr) von 0,20 µm und quer zur Dressierrichtung (qD) von 0,08 µm ermittelt.

Ein weiterer Versuch wurde mit der in Figur 2 gezeigten Oberflächentopografie (12) deterministisch texturierten Dressierwalze auf einem mit einem zinkbasierten Überzug beschichteten Stahlblech, wobei der Überzug durch Schmelztauchbeschichten mit einer Dicke von 7 µm aufgebracht worden ist, mit einem Dressiergrad von 1 % durchgeführt. Unter Anwendung der Vorschriften in SEP1941 wurde ein Wsa(1-5) in Dressierrichtung (Dr) von 0,14 µm und quer zur Dressierrichtung (qD) von 0,10 µm ermittelt.

Die Nachteile aus dem Stand der Technik können durch eine nicht erfindungsgemäße deterministische Texturierung eines beschichteten Stahlblechs flächendeckende Wsa(1-5)-Werte unterhalb von 0,30 µm und somit hervorragende Lackanmutung der beschichteten Stahlbleche erreicht werden. Auch wenn in diesem Beispiel nur eine Wellenfunktion, welche dem gefilterten Rauheitsprofil (13.1) entspricht, veranschaulicht ist, so sind auch andere Ausführungen möglich, dass sich das sich das gefilterte Rauheitsprofil (13.1) aus mehreren überlagerten Wellenfunktionen zusammensetzt, wobei mindestens eine der Wellenfunktionen eine Wellenlänge λ_{WiD} =< 1 mm und eine Amplitude a_{WiD} > 0,3 µm aufweist.

## Patentansprüche

1. Verfahren zum Lasertexturieren einer Dressierwalze (11), wobei die Oberfläche (11.1) der Dressierwalze (11) mit einem Laser bearbeitet wird, so dass eine deterministische Oberflächentopografie (12) mittels Ablation auf der Oberfläche (11.1) der Dressierwalze (11) erzeugt wird, **dadurch gekennzeichnet, dass** die Bearbeitung mit dem Laser derart durchgeführt wird, dass die Oberflächentopografie (12) zumindest entlang mehrerer parallel zueinander und in Axialrichtung (A) und/oder in Umfangsrichtung (U) der Dressierwalze (11) verlaufende Linien (DA1...DAx, DU1...DUy) jeweils einem wellenförmigen Oberflächenprofil (13) folgt, wobei das aus dem Oberflächenprofil (13) gemäß ISO 16610-21:2013-06 gefilterte Rauheitsprofil (13.1) mit einer Grenzwellenlänge λ_{GC} = 2,5 mm nach DIN EN ISO 4288:1998-04 im Schnitt entlang der Linie (DA1...DAx, DU1...DUy) in Axialrichtung (A) und/oder in Umfangsrichtung (U) der Dressierwalze (11) mindestens eine Wellenfunktion umfasst, welche eine Wellenlänge λ_{WiD} =< 1 mm und einer Amplitude a_{WiD} > 0,3 µm aufweist, wobei der Laser zur Erzeugung der Oberflächentopografie (12) in Axialrichtung (A) und/oder in Umfangsrichtung (U) der Dressierwalze (11) mit unterschiedlichen Intensitäten angesteuert wird.

2. Verfahren nach Anspruch 1, wobei als Laser ein Kurzpuls- oder ein Ultrakurzpulslaser verwendet wird.

## Claims

1. Method for laser texturing a skin pass roll (11), wherein the surface (11.1) of the skin pass roll (11) is worked on using a laser such that a deterministic surface topography (12) is produced on the surface (11.1) of the skin pass roll (11) by means of ablation, **characterized in that** the working using the laser is carried out in such a way that the surface topography (12) in each case follows a wavy surface profile (13), at least along a plurality of lines (DA1...DAx, DU1...DUy) running parallel to one another and in the axial direction (A) and/or in the circumferential direction (U) of the skin pass roll (11), wherein the roughness profile (13.1) with a cut-off wavelength X_{GC} = 2.5 mm pursuant to DIN EN ISO 4288:1998-04 filtered from the surface profile (13) pursuant to ISO 16610-21:2013-06 has at least one wavefunction in the section along the line (DA1... DAx, DU1...DUy) in the axial direction (A) and/or in the circumferential direction (U) of the skin pass roll (11), the said wavefunction having a wavelength λ_{WiD} =< 1 mm and an amplitude a_{WiD} > 0.3 µm, wherein the laser is controlled with different intensities for the purpose of producing the surface topography (12) in the axial direction (A) and/or in the circumferential direction (U) of the skin pass roll (11).

2. Method according to Claim 1, wherein a short pulse laser or an ultrashort pulse laser is used as a laser.

## Revendications

1. Procédé de texturation par laser d'un cylindre de dressage (11), dans lequel la surface (11.1) du cylindre de dressage (11) est usinée par un laser de sorte qu'une topographie de surface déterministe (12) est générée au moyen d'une ablation à la surface (11.1) du cylindre de dressage (11), **caractérisé en ce que** l'usinage par le laser est effectué de telle sorte que la topographie de surface (12) suit respectivement un profil de surface ondulé (13) au moins le long de plusieurs lignes (DA1 ... DAx, DU1 ... DUy) s'étendant en parallèle les unes aux autres et dans la direction axiale (A) et/ou dans la direction circonférentielle (U) du cylindre de dressage (11), dans lequel le profil de rugosité (13.1) filtré à partir du profil de surface (13) selon ISO 16610-21:2013-06, avec une longueur d'onde limite λ_{GC} = 2,5 mm selon DIN EN ISO 4288:1998-04, comprend en section le long de la ligne (DA1 ... DAx, DU1 ... DUy) dans la direction axiale (A) et/ou dans la direction circonférentielle (U) du cylindre de dressage (11) au moins une fonction d'onde qui présente une longueur d'onde λ_{WiD} =< 1 mm et une amplitude a_{WiD} > 0,3 µm, dans lequel le laser est piloté avec différentes intensités pour générer la topographie de surface (12) dans la direction axiale (A) et/ou dans la direction circonférentielle (U) du cylindre de dressage (11).

2. Procédé selon la revendication 1, dans lequel un laser à impulsion courte ou un laser à impulsion ultracourte est utilisé en tant que laser.
